# EUROPEAN PATENT APPLICATION

(11) **EP 4 015 195 A1**
(43) Date of publication of application: **22.06.2022**
(21) Application number: 20215611.3
(22) Date of filing: 18.12.2020
(51) Int. Cl.: B29C 64/118, B29C 64/20, B29C 64/209, B29C 64/295, B29C 64/386, B29C 64/393, B33Y 10/00, B33Y 30/00, B33Y 40/00, B33Y 50/02

(54) **EXTRUSION-BASED ADDITIVE MANUFACTURING: 3D PRINTING SYSTEM AND METHOD**

(71) Applicant: Bond High Performance 3D Technology B.V., 7521 PK Enschede (NL)
(72) Inventor: Voss, Kevin Hendrik Jozef, 7521 PK Enschede (NL); Krechting, Petrus Theodorus, 7521 PK Enschede (NL)
(74) Representative: Renkema, Jaap

(57) **Abstract**

An extrusion-based AM 3D printing system (100) comprising a printhead assembly (110) comprising a feedstock liquefying unit (130) and a heating element (114) that is configured to generate heat for transforming solid feedstock material into liquefied feedstock material that is extruded as an extrudate (117) via a nozzle (118) of an outlet portion of the feedstock liquefying unit. The system further comprises an extrudate temperature sensor (119) for determining a temperature of the extrudate (117) freshly exiting the nozzle, and a control unit (140) that is configured to execute a heater controlling algorithm that is configured to generate initial control settings for the heating element, and to execute the heater controlling algorithm for generating adjusted control settings for improving control of the temperature of the extrudate.

The disclosure also relates to a method of improved control of the extrudate temperature.

## Description

### FIELD OF THE INVENTION

The present invention relates to an extrusion-based additive manufacturing, AM, three-dimensional, 3D, printing system and a method that can be performed using said system.

### BACKGROUND OF THE INVENTION

In 3D printing using an extrusion-based additive manufacturing process, 3D parts are formed by layering extruded AM feedstock material in a controlled manner such that a desired 3D part can be created. Commonly, a 3D printing system is used that comprises a printhead that is moveable in a 3D space with respect to a build surface while dispensing AM feedstock material on at least one of the build surface and on previously deposited tracks of the AM feedstock material that are supported by the build surface. However, various options are available for moving the printhead and the build surface on which the 3D part is printed relative to each other.

The 3D printing system comprises a control system that is configured to control a controllable positioning system to which the printhead is attached for controlling movements of the printhead. By means of software a pattern of toolpaths can be generated, which pattern is used for moving the printhead and for depositing the tracks of extruded AM feedstock material.

The 3D part is created on the build surface in a reference location relative to the movable printhead. The AM feedstock material can be fused with previously deposited tracks. The AM feedstock material can be fed into the printhead in the form of for example filament, granulate, rod, liquid, resin or a suspension. The AM feedstock material can be any suitable polymer-based material such as for example PEEK.

In case that the AM feedstock material is fed into the printhead in a solid form, a liquefying unit is used to melt the AM feedstock material and allow deposition via a nozzle on the build surface in the form of tracks forming a layer of tracks, or when a previous layer of the 3D part to be created has been deposited, on previously deposited tracks where it is allowed to solidify after the deposition. The AM feedstock material can be thermally or chemically or otherwise fused with the previously deposited tracks.

The relative motion of the build surface and the 3D part supported by it with respect to the printhead along tracks and the simultaneous deposition of AM feedstock material from the printhead allow the 3D part to be built up and to gradually attain its desired shape with each consecutively deposited track of AM feedstock material.

Especially extrusion-based AM printing of high-performance 3D parts that are to be used in critical applications in for example the medical, automotive, or aerospace domain, should have amongst others excellent mechanical properties, such as a high tensile strength, and aesthetic properties. Failure to manufacture at least a sufficient number of 3D parts that have the required properties enabling them to be applied in critical applications in at least one of the above-mentioned technical domains, has a negative effect on production yield. Consequently, this can have a negative effect on the costs of the printed 3D parts and can give rise to significant related financial damage.

Based on the above, there is a need to provide an extrusion-based AM 3D printing system and a method that allow improving the production yield of high-performance 3D printed parts having amongst others excellent mechanical properties, such as a high tensile strength, and aesthetic properties. In addition, the AM 3D printing system and the method should be able to allow the costs of the 3D printed parts to be reduced, thereby allowing financial gain to be increased.

### SUMMARY OF THE INVENTION

It is an object of the present invention to provide an extrusion-based AM 3D printing system for improving the production yield of high-performance 3D parts, said system pre-empting or at least reducing at least one of the abovementioned and/or other disadvantages associated with extrusion-based AM 3D printing systems known in the art.

It is another object of the present invention to provide a method that when performed on an AM 3D printing system according to the invention allows improving the production yield of the high-performance 3D parts obtained.

Aspects of the present invention are set out in the accompanying independent and dependent claims. Features from the dependent claims may be combined with features from the independent claim as appropriate and not merely as explicitly set out in the claims. Furthermore, all features may be replaced with other technically equivalent features.

At least one of the abovementioned objects is achieved by providing an extrusion-based additive manufacturing, AM, three-dimensional, 3D, printing system, comprising:
- a printhead assembly comprising a feedstock liquefying unit and a heating element, the feedstock liquefying unit comprising:
   o a liquefying portion that is arranged in thermal contact with the heating element, the heating element being configured to generate heat for transforming solid feedstock material received in the liquefying portion into liquefied feedstock material;
   ∘ an outlet portion that is connected to the liquefying portion for receiving liquefied feedstock material from the liquefying portion, the outlet portion being provided with a nozzle that is configured to extrude the liquefied feedstock material as an extrudate;
- an extrudate temperature sensor that is configured and arranged with respect to the nozzle for determining a temperature of the extrudate freshly exiting the nozzle; and
- a control unit that is operatively connected with the extrudate temperature sensor and the heating element, the control unit being configured to:
   ∘ receive input including a predefined setpoint value for the temperature of the extrudate;
   ∘ execute a heater controlling algorithm that is configured to generate control settings for the heating element on the basis of the received input;
   ∘ determine a temperature offset between the predefined setpoint value for the temperature of the extrudate and the temperature of the extrudate received from the extrudate temperature sensor; and
   ∘ execute the heater controlling algorithm that is configured to generate adjusted control settings for the heating element based on said temperature offset in order to at least minimize said temperature offset.

The control unit of the 3D printing system according to the invention is configured to execute a heater control algorithm that is configured to generate initial control settings for the heating element on the basis of the received input including a predefined setpoint value for the temperature of the extrudate.

The person skilled in the art will appreciate that thermal gradients in at least the heating element, the feedstock liquefying unit and the feedstock material can cause the temperature of the extrudate that freshly exits the nozzle to differ from the temperature of the heating element. Moreover, the thermal gradients can vary from one printhead assembly to another for example due to the thermal contact between the feedstock liquefying unit and the heating element. In addition, the thermal gradients can depend on for example the flow rate of the liquefied feedstock material, and the lifetime of the nozzle.

The person skilled in the art will appreciate that it is very hard to measure the temperature of the extrudate that freshly exits the nozzle because of the large temperature drop of the extrudate upon exiting the nozzle and because of the limited space between the nozzle and one of the build surface and previously deposited layers of feedstock material while printing an actual 3D part. Regarding the latter, it is advantageous to determine the temperature of the extrudate that freshly exits the nozzle when the printhead assembly is positioned at a non-printing location, e.g. at a purge bin location, in the build chamber of the 3D printing system. While the printhead assembly is positioned at a non-printing location, the extrudate temperature sensor can be configured and arranged with respect to the nozzle of the printhead assembly to determine the temperature of the extrudate that freshly exits the nozzle as the maximum temperature of the extrudate that is measured within a predefined area just below the nozzle.

Furthermore, the control unit is configured to determine a temperature offset between the above-mentioned predefined setpoint value for the temperature of the extrudate and the temperature of the extrudate that freshly exits the nozzle received from the extrudate temperature sensor. It is noted that in the context of the present invention, the term "offset" is not to be construed as a constant value over time but more in a general sense, i.e. as a difference between two values.

The control unit is further configured to execute the heater controlling algorithm that is configured to generate adjusted control settings for the heating element based on said temperature offset in order to at least minimize said temperature offset. In this way, it is possible to improve the control of the temperature of the extrudate that freshly exits the nozzle. An improved control of the temperature of the extrudate enables improvement of the mechanical properties such as tensile strength and the aesthetic properties of the printed 3D parts. Consequently, the production yield of high-performance 3D parts can be improved, and the costs of the 3D parts can be reduced.

Another advantage of an improved control of the temperature of the extrudate is that nozzle life-time can be increased. The person skilled in the art will appreciate that, in order to achieve sufficient heat transfer to the feedstock material for liquefying the feedstock material, a fresh nozzle, i.e. a nozzle having an inner wall free from any carbon-based deposits, does not need to be heated to a temperature as high as a temperature that would be required for a nozzle that has previously been used and therefore has an inner wall on which carbon-based deposits are present. Therefore, avoiding heating up of a fresh nozzle to an unnecessary high temperature can increase nozzle life-time. The latter can also result in reduced costs of the 3D printed parts.

In view of the above-mentioned determination of the temperature of an extrudate that freshly exits the nozzle while the printhead assembly is positioned at a non-printing location, the person skilled in the art will appreciate that the adjusted control settings are being generated based on information obtained when the 3D printing system is not actually printing a 3D part. Therefore, the generated adjusted control settings are used under the assumption that they remain valid during the subsequent actual printing process of at least one 3D part.

In an embodiment of the system according to the invention, the heater controlling algorithm is configured to use a relationship between the received input and the control settings for the heating element, and wherein the control unit is configured to perform a calibration action of the heater controlling algorithm for generating the adjusted control settings for the heating element, the calibration action being configured to involve an adjustment of said relationship on the basis of the temperature offset.

The person skilled in the art will appreciate that the exact nature of the relationship between the setpoint value of the temperature of the extrudate of the received input and the control settings for the heating element can depend on the particular thermal characteristics of for example the printhead assembly at a given time during the printing process. In view thereof, the 3D printing system according to the invention provides the possibility of performing a calibration action of the heater controlling algorithm. In this way, it is possible to adapt the heater controlling algorithm to the actual thermal characteristics of any specific printhead assembly at any given time during the printing process and to thereby achieve that an actual value of the temperature of the extrudate that freshly exits the nozzle can at least be considerably closer to the predefined setpoint value for the temperature of the extrudate.

In particular, the temperature of the extrudate that freshly exits the nozzle can be determined periodically, for example during purging of the feedstock liquefying unit at a purge bin location in the 3D printing system during nozzle maintenance or during purging at the purge bin location of a feedstock liquefying unit upon fresh installation of the feedstock liquefying unit in the printhead assembly as a result of a feedstock liquefying unit exchange.

Based on the temperature offset determined by the control unit between the predefined setpoint value for the temperature of the extrudate and the temperature of the extrudate determined using the extrudate temperature sensor during one of the above-mentioned exemplary events, the relationship between the setpoint value of the temperature of the extrudate of the received input and the control settings for the heating element can be changed. In this way, the heater controlling algorithm can be calibrated in order to generate adjusted control settings for the heating element in order to minimize the temperature offset. As a result, the control of the temperature of the extrudate that freshly exits the nozzle can be improved as all kinds of static and dynamic errors can be compensated for. It is noted that the calibration action can be initiated and performed at any appropriate moment such as prior to an actual 3D printing process.

A flow rate of the liquified feedstock material can be variable. Therefore, in an embodiment of the system according to the invention, the control unit is configured to perform the calibration action for different values of the flow rate of the liquefied feedstock material and to determine the temperature offset in respect of each of the respective values of the flow rate of the liquefied feedstock material. During one of the above-mentioned exemplary events at the purge bin location, the extrudate temperature sensor can determine the temperature of the extrudate at different values of the flow rate for different control settings for the heating element. In this way, the relationship between the setpoint value of the temperature of the extrudate of the received input and the control settings for the heating element can be changed as a function of the flow rate that will be used during the printing process. The person skilled in the art will appreciate that the flow rate will typically be the volumetric flow rate of the liquefied feedstock material. However, it is also possible to use the mass flow rate of the feedstock material.

In an embodiment of the system according to the invention, the received input by the control unit may also include a value of the flow rate of the liquefied feedstock material. In this way, the control settings for the heating element can be generated as a function of the flow rate that will be used during the printing process.

In an embodiment of the system according to the invention, the heater controlling algorithm is configured to determine a setpoint value of a temperature of the heating element on the basis of a relationship between the predefined setpoint value of the temperature of the extrudate and the setpoint value of a temperature of the heating element. In the event that the heating element is an electrically powered heating element, the heating element can be provided with an amount of electric power that is sufficient for achieving the setpoint value of the temperature of the heating element that is determined on the basis of the above-mentioned relationship between the predefined setpoint value of the temperature of the extrudate and the setpoint value of the temperature of the heating element. In this respect, it is noted that in an embodiment of the system according to the invention, the control settings for the heating element can relate to a supply of electric power to the heating element.

In an embodiment of the system according to the invention, the system comprises a printhead assembly temperature sensor that is configured and arranged to determine a temperature of at least one of the heating element and the nozzle. The person skilled in the art will appreciate that due to the above-mentioned thermal gradients associated with the printhead assembly, the printhead assembly does not have a single temperature. Instead, there is a temperature field with different values across the printhead assembly. Therefore, the temperature of for example the heating element as such can be determined as the maximum temperature in a predefined area of the heating element that is considered to be relevant for the heat exchange with the feedstock liquefying unit. A similar approach can be used to determine the temperature of the nozzle as such.

In an embodiment of the system according to the invention, the printhead assembly temperature sensor is configured to determine a temperature of the heating element, and the control unit is configured to receive a determined value of a temperature of the heating element and to generate adjusted control settings for the heating element in case the determined value of a temperature of the heating element differs from the setpoint value of a temperature of the heating element more than a predetermined amount. In this way, control of the temperature of the heating element can be improved. The value of the temperature of the heating element can for example be determined by measuring the electrical conductivity of the heating element. Based on the measured electrical conductivity a value for the temperature of the heating element can be determined that may be considered to be relevant for the heat exchange with the feedstock liquefying unit. The determined value for the temperature of the heating element can be provided to the control unit as input for the heater controlling algorithm during operation of the system. The person skilled in the art will appreciate that the temperature of the heating element can also be measured using a thermocouple. Furthermore, it is possible to use a thermistor with either a positive temperature coefficient or a negative temperature coefficient.

Based on the above, the person skilled in the art will appreciate that the printhead assembly temperature sensor can be a sensor of any suitable type and arrangement. The sensor can for example be arranged in contact with the heating element or at a remote location for determining the temperature of the heating element.

In an embodiment of the system according to the invention, the extrudate temperature sensor is removably arranged in the system and is selected from a group that includes an infrared sensor and a thermal camera. By removably arranging the extrudate temperature sensor in the system, the extrudate temperature sensor can be provided for example as a temporary add-on, e.g. shared between multiple 3D printers. However, the extrudate temperature sensor can also be arranged at a fixed location in, or attached to, a build chamber of the 3D printing system, for example at the purge bin location. The extrudate temperature sensor can be selected from a group that includes an infrared sensor and a thermal camera. The person skilled in the art will appreciate that depending on the process conditions, such as temperature in the build chamber, provisions may be required to guarantee reliable operation of the extrudate temperature sensor. For example, if the printing process is performed at elevated temperatures, for example at temperatures above 100°C, it may be necessary to protect the extrudate temperature sensor by shielding it using for example infrared (IR) translucent and heat insulating material, e.g. glass.

In an embodiment of the system according to the invention, the control unit is configured to generate an alarm signal if said temperature offset is higher than a first predefined threshold value and/or to prevent operation of the system if said temperature offset is higher than a second predefined threshold value, wherein said second predefined threshold value is higher than said first predefined threshold value. The alarm signal can indicate that for example the feedstock liquefying unit needs to be serviced or replaced in the near future. However, the system can still be operated and the servicing or replacement of the feedstock liquefying unit can still be postponed. If the second predefined threshold is exceeded, servicing or replacement of for example the feedstock liquefying unit cannot be postponed any longer and operation of the system is prevented.

It is noted that the temperature offset is to be construed as an absolute value of the temperature difference between the predefined setpoint value for the temperature of the extrudate and the temperature of the extrudate received from the extrudate temperature sensor. In this respect, the person skilled in the art will appreciate that if the determined temperature of the extrudate is in a temperature window within which printing of high-performance 3D parts is feasible, the alarm signal can be generated if the determined temperature of the extrudate is near the edges of said temperature window. If the determined temperature of the extrudate is outside said temperature window, operation of the 3D printing system can be prevented. Regarding the latter, the person skilled in the art will appreciate that if the determined temperature of the extrudate is too low, for example due to nozzle aging, reliable printing cannot be guaranteed because at least one of the adhesion between the first layer of feedstock material and the build surface and the cohesion between subsequent layers of feedstock material of the same kind can be insufficient. Insufficient cohesion between subsequent layers of feedstock material of the same kind can result in insufficient mechanical properties, such as insufficient tensile strength of the printed 3D parts. In such case, printing of high-performance 3D parts is not possible. Similarly, if the determined temperature of the extrudate is too high, for example when a fresh or cleaned nozzle is installed in the printhead assembly, the person skilled in the art will appreciate that degradation of the feedstock material can occur. This can prevent printing of high-performance 3D parts because the degraded feedstock material prevents at least one of sufficient mechanical properties and aesthetic properties of the printed 3D parts.

According to another aspect of the present invention, a method is provided that allows improved control of a temperature of an extrudate that is extruded using an extrusion-based additive manufacturing, AM, three-dimensional, 3D, printing system that comprises:
- a printhead assembly comprising a feedstock liquefying unit and a heating element, the feedstock liquefying unit comprising:
   ∘ a liquefying portion that is arranged in thermal contact with the heating element, the heating element being configured to generate heat for transforming solid feedstock material received in the liquefying portion into liquefied feedstock material;
   ∘ an outlet portion that is connected to the liquefying portion for receiving liquefied feedstock material from the liquefying portion, the outlet portion being provided with a nozzle that is configured to extrude the liquefied feedstock material as an extrudate;
- an extrudate temperature sensor that is configured and arranged with respect to the nozzle for determining a temperature of the extrudate freshly exiting the nozzle; and
- a control unit that is operatively connected with the extrudate temperature sensor and the heating element, the control unit being configured to
   ∘ receive input including a predefined setpoint value for the temperature of the extrudate;
   ∘ execute a heater controlling algorithm that is configured to generate control settings for the heating element on the basis of the received input;
   ∘ determine a temperature offset between the predefined setpoint value for the temperature of the extrudate and the temperature of the extrudate received from the extrudate temperature sensor; and
   ∘ execute the heater controlling algorithm that is configured to generate adjusted control settings for the heating element based on said temperature offset in order to at least minimize said temperature offset;
wherein the method comprises:
- operating the control unit to execute a heater controlling algorithm for generating control settings for the heating element on the basis of the received input;
- operating the extrudate temperature sensor to determine the temperature of the extrudate freshly exiting the nozzle;
- operating the control unit to determine the temperature offset between the predefined setpoint value for the temperature of the extrudate and the determined temperature of the extrudate freshly exiting the nozzle; and
- operating the control unit to execute the heater controlling algorithm for generating adjusted control settings for the heating element based on said temperature offset in order to at least minimize said temperature offset.

The person skilled in the art will appreciate that the method according to the invention can improve the control of the temperature of the extrudate that freshly exits the nozzle. An improved control of the temperature of the extrudate enables improvement of the mechanical properties such as tensile strength and the aesthetic properties of the printed 3D parts. Consequently, the production yield of high-performance 3D parts can be improved, and the costs of the 3D parts can be reduced. Another advantage of an improved control of the temperature of the extrudate is that nozzle life-time can be increased. The person skilled in the art will appreciate that, in order to achieve sufficient heat transfer to the feedstock material for liquefying the feedstock material, a fresh nozzle, i.e. a nozzle having an inner wall free from any carbon-based deposits, does not need to be heated to a temperature as high as a temperature that would be required for a nozzle that has previously been used and therefore has an inner wall on which carbon-based deposits are present. Therefore, avoiding heating up of a fresh nozzle to an unnecessary high temperature can increase nozzle life-time. The latter can also result in reduced costs of the 3D printed parts.

The heater controlling algorithm can be configured to use a relationship between the received input and the control settings for the heating element. Therefore, in an embodiment of the method according to the invention, the method comprises:
- operating the control unit to perform a calibration action of the heater controlling algorithm for generating the adjusted control settings for the heating element; and wherein the calibration action involves:
- adjusting said relationship on the basis of the temperature offset.

A flow rate of the liquified feedstock material can be variable. Therefore, in an embodiment of the method according to the invention, the method comprises:
- operating the control unit to perform the calibration action for different values of the flow rate of the liquefied feedstock material and to determine said temperature offset in respect of each of the respective values of the flow rate of the liquefied feedstock material.

In an embodiment of the method according to the invention, the method further
comprises operating the control unit to execute the heater controlling algorithm for generating control settings for the heating element on the basis of received input that further includes a value of the flow rate of the liquefied feedstock material.

In an embodiment of the method according to the invention, the method further comprises:
- operating the control unit to determine a setpoint value of a temperature of the heating element on the basis of a relationship between the predefined setpoint value of the temperature of the extrudate and the setpoint value of a temperature of the heating element.

In an embodiment of the method according to the invention, the method further comprises:
- operating a printhead assembly temperature sensor to determine a temperature of the heating element, and
- operating the control unit to receive a determined value of a temperature of the heating element and to generate adjusted control settings of the heating element in case the determined value of a temperature of the heating element differs from the setpoint value of a temperature of the heating element more than a predetermined amount.

### BRIEF DESCRIPTION OF THE DRAWINGS

Further features and advantages of the invention will become apparent from the description of the invention by way of exemplary and non-limiting embodiments of an extrusion based AM 3D printing system and method according to the invention.

The person skilled in the art will appreciate that the described embodiments of the system and method according to the present invention are exemplary in nature only and not to be construed as limiting the scope of protection in any way. The person skilled in the art will realize that alternatives and equivalent embodiments of the system and method can be conceived and reduced to practice without departing from the scope of protection of the present invention.

Reference will be made to the figures on the accompanying drawing sheets. The figures are schematic in nature and therefore not necessarily drawn to scale. Furthermore, equal reference numerals denote equal or similar parts. On the attached drawing sheets,
figure 1 shows a schematic view of a printhead assembly, an extrudate temperature sensor and a control unit of an AM 3D printing system in accordance with an embodiment of the invention, wherein the printhead assembly is depicted in sectional view;
figure 2 shows a schematic view of a printhead assembly, an extrudate temperature sensor and a control unit of an AM 3D printing system in accordance with an alternative embodiment of the invention, wherein the printhead assembly is depicted in sectional view;
figure 3 shows a schematic block diagram of the AM 3D printing system in accordance with the alternative embodiment shown in figure 2; and
figure 4 shows a flow chart of an exemplary embodiment of a method according to the invention.

### DETAILED DESCRIPTION OF EMBODIMENTS

The invention will be further elucidated in exemplary embodiments thereof as described below.

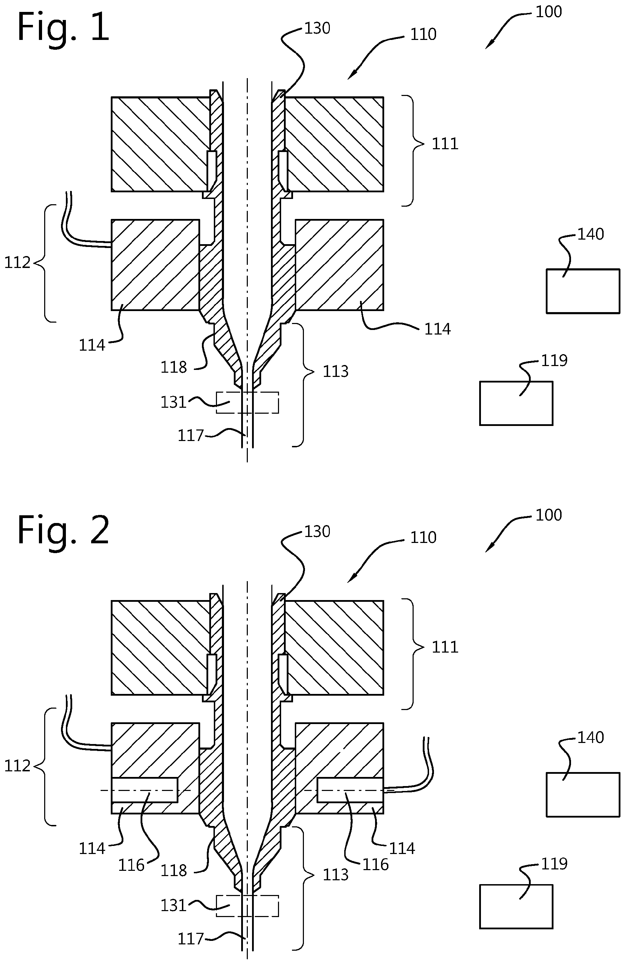

Figure 1 illustrates an exemplary additive manufacturing system 100 according to an embodiment of the present invention. In this embodiment, the system 100 comprises a printhead assembly 110, an extrudate temperature sensor 119, and a control unit 140. The printhead assembly 10 comprises a feedstock liquefying unit 130 having a feeding portion 111, a liquefying portion 112 that is arranged in thermal contact with a heating element 114. The feedstock liquefying unit 130 also comprises an outlet portion 113 having a nozzle 118.

The feeding portion 111 is configured to receive a feedstock material, wherein the feedstock material may be any material that is suitable for 3D printing such as polymer-based materials, e.g. PEEK. The feedstock material may be provided in the form of for example filament, granulate, rod, liquid, resin, or a suspension. The heating element 114 is configured to generate heat for transforming solid feedstock material received in the liquefying portion 112 into liquefied feedstock material. The nozzle 118 is configured to extrude the liquefied feedstock material as an extrudate 117.

The heating element 114 may be an electrically powered heating element. In general, the liquefying portion 112 may be designed to allow a smooth flow of liquefied feedstock material with minimal residence time. It is practical if the heating element 114 is arranged so as to closely surround the nozzle 118, as is the case in the shown example.

During a 3D printing process, control settings of the heating element 114 are generated by the control unit 140. To this end, the control unit 140 is configured to execute a heater controlling algorithm that is configured to generate initial control settings for the heating element 114 on the basis of received input that includes a predefined setpoint value for the temperature of the extrudate 117.

The extrudate temperature sensor 119 is configured and arranged to provide the maximum temperature of the extrudate 117 that is measured within a predefined area 131 just below the nozzle 118 as the temperature of the extrudate 117 freshly exiting the nozzle 18. The extrudate temperature sensor 119 may be arranged at a fixed position relative to the nozzle 118, but it is also possible that the extrudate temperature sensor 119 and the printhead assembly 110 are movable relative to each other, so that a position of the extrudate temperature sensor 119 is variable between i) a functional position in which the extrudate temperature sensor 119 is sufficiently close to the predefined area 131 just below the nozzle 118 to be able to perform the function of measuring the temperature of the extrudate 117 and ii) a non-functional position. In accordance with an embodiment of the 3D printing system and method of the invention, the extrudate temperature sensor 119 can be used in a calibration action of the heater controlling algorithm that is performed by the control unit 140. The calibration action involves adjusting the relation between received input and control settings for the heating element 114 on the basis of a temperature offset that is determined by the control unit 140 between the predefined setpoint value for the temperature of the extrudate 117 and the temperature of the extrudate 117 received from the extrudate temperature sensor 119.

By performing the calibration action as mentioned, the heater controlling algorithm can be adapted to the particular thermal characteristics of the printhead assembly 110, i.e. the characteristics influencing the way in which operation of the heating element 114 eventually results in a temperature of the extrudate 117 freshly exiting the nozzle 118. The fact is that in practice, these thermal characteristics deviate from theoretically determined thermal characteristics, due to for example constructional factors such as the exact positioning of the feedstock liquefying unit 130 and the heating element 114 relative to each other and time-related factors such as build-up of carbon deposit on the inner wall of at least one of the liquefying portion 112 and the nozzle 118. When the calibration action is performed on a regular basis, the heater controlling algorithm can regularly be adjusted so as to be in compliance with an actual relationship between the control settings for the heating element 114 and the temperature of the extrudate 117. Hence, when the calibration action is performed on a regular basis, the accuracy of controlling the temperature of the extrudate 117 can be kept at an optimal level, which contributes to obtaining the best possible quality of the 3D printed parts. According to a practical option, the calibration action is performed prior to initiation of a 3D printing process, or during a pause of a 3D printing process, while the printhead assembly 110 is operated to let a strand of extrudate 117 flow freely from the nozzle 118, preferably at a purge bin location.

It is to be noted that the calibration action can be performed in respect of different values of the flow rate of the liquefied feedstock material so that during a subsequent 3D printing process, the flow rate of the liquefied feedstock material can be taken into account in the heater controlling algorithm and the control settings for the heating element 114 can be optimal when it comes to obtaining an actual temperature of the extrudate 117 that is as close as possible to a predefined setpoint temperature of the extrudate 117. As mentioned above, the person skilled in the art will appreciate that the flow rate can be the volumetric flow rate or the mass flow rate of the feedstock material.

Figure 2 shows a schematic view of a printhead assembly 110, an extrudate temperature sensor 119 and a control unit 140 of an AM 3D printing system 100 in accordance with an alternative embodiment of the invention, wherein the printhead assembly is depicted in sectional view. The alternative embodiment of the system 100 shown in figure 2 differs from the embodiment of the system 100 shown in figure 1 in that the latter embodiment does not include a printhead assembly temperature sensor 116. The printhead assembly temperature sensor 116 is configured to measure a temperature of the heating element 114. The person skilled in the art will appreciate that due to the above-mentioned thermal gradients associated with the printhead assembly 110, it is very difficult to measure the temperature of the heating element 114 and/or the nozzle 118 as such. Therefore, the temperature of the heating element 114 as such can be considered as the maximum temperature of the heating element 114 in a predefined area of the heating element 114 that is considered to be relevant for the heat exchange with the feedstock liquefying unit 130. A similar reasoning applies to the temperature of the nozzle 118.

Input from the printhead assembly temperature sensor 116 about a temperature of the heating element 114 can be used in a calibration action regarding generation of adjusted control settings for the heating element 114 in case a temperature of the heating element 114 differs from a setpoint value of a temperature of the heating element 114 more than a predetermined amount. The setpoint value of a temperature of the heating element 114 as mentioned, may follow from the heater controlling algorithm, as the heater controlling algorithm may be configured to determine this setpoint value on the basis of the predefined setpoint value of temperature of the extrudate 117, according to a relation between these two respective setpoint values.

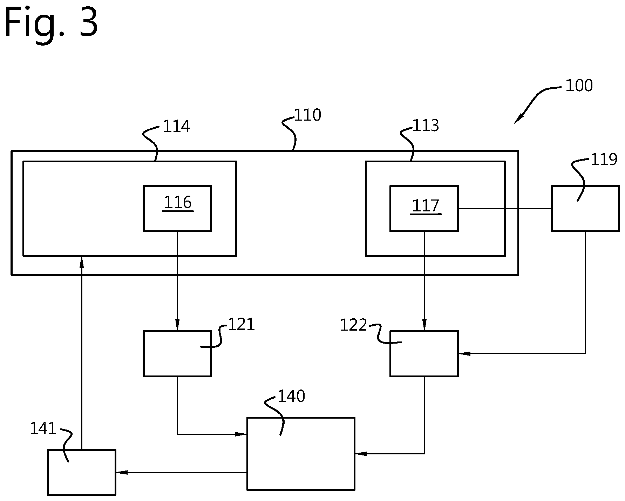

Figure 3 shows a schematic block diagram of the alternative embodiment of the AM 3D printing system 100 shown in figure 2. As explained in the foregoing, the system 100 includes a printhead assembly 110, an extrudate temperature sensor 119, and a control unit 140. The printhead assembly 110 is arranged in thermal contact with the heating element 114 that is provided with a printhead assembly temperature sensor 116. Furthermore, figure 3 visualizes aspects of the calibration action that can be performed by the control unit 140, wherein the temperature offset that is determined between a predefined setpoint value of the temperature of the extrudate 117 and an actual value of the temperature of the extrudate 117 received from the extrudate temperature sensor 119 is represented by a block 141, and wherein the actual value of the temperature of the extrudate 117 received from the extrudate temperature sensor 119 is represented by a block 122. Furthermore, the value of a temperature of the heating element 114 received from the printhead assembly temperature sensor 116 is represented by a block 121.

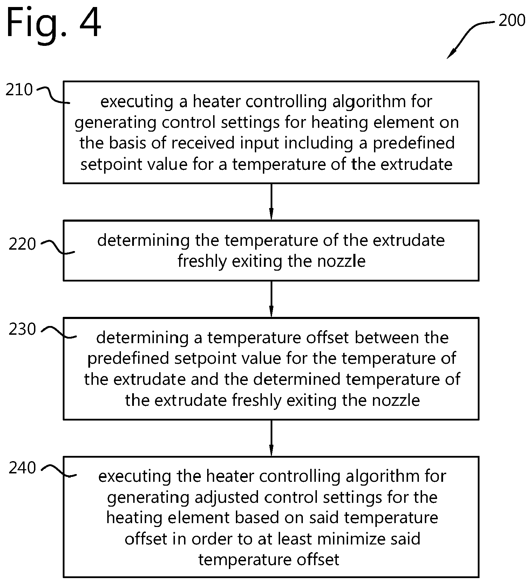

Figure 4 shows a flow chart of an exemplary embodiment of a method 200 according to the invention, which is a method of improved control of a temperature of an extrudate that is extruded using an AM 3D printing system 100 according to the invention. The method involves a first step 210 of operating the control unit 140 to execute a heater controlling algorithm for generating control settings for the heating element 114 on the basis of received input including a predefined setpoint value for a temperature of the extrudate 117.The method involves a second step 220 of determining the temperature of the extrudate 117 that freshly exits the nozzle 118. A third step 230 of the method 200 involves determining a temperature offset 141 between a predefined setpoint value for the temperature of the extrudate 117 and an actual value of the temperature of the extrudate 117 received from the extrudate temperature sensor 119. A fourth step 240 of the method 200 involves executing the heater controlling algorithm for generating adjusted control settings for the heating element 114 on the basis of the determined temperature offset 141 in order to at least minimize the temperature offset 141.

The person skilled in the art will appreciate that the steps 210, 220, 230, and 240 of the exemplary embodiment of the method 200 as shown in figure 4, may relate to the use of an AM 3D printing system having any one of the features or combinations of features that are disclosed herein in connection with the AM 3D printing system 100 according to the invention. Accordingly, the disclosure of figures 1-3 and the aspects of the earlier discussions of the AM 3D printing system 100 are hereby incorporated into the present discussion of the exemplary embodiment of the method 200.

Furthermore, it is noted that in accordance with an alternative embodiment of the method 200, wherein the heater controlling algorithm is configured to use a relationship between the received input and the control settings for the heating element 114, the method 200 comprises a step (not shown in figure 4) of operating the control unit 140 to perform a calibration action of the heater controlling algorithm for generating the adjusted control settings for the heating element 114. As described above, the calibration action involves adjusting the relationship between the received input and the control settings for the heating element 114 on the basis of the temperature offset 141.

The present invention can be summarized as relating to an extrusion-based AM 3D printing system (100) comprising a printhead assembly (110) comprising a feedstock liquefying unit (130) and a heating element (114) that is configured to generate heat for transforming solid feedstock material into liquefied feedstock material that is extruded as an extrudate (117) via a nozzle (118) of an outlet portion of the feedstock liquefying unit. The system further comprises an extrudate temperature sensor (119) for determining a temperature of the extrudate (117) freshly exiting the nozzle, and a control unit (140) that is configured execute a heater controlling algorithm that is configured to generate initial control settings for the heating element, and to execute the heater controlling algorithm for generating adjusted control settings for improving control of the temperature of the extrudate. The invention also relates to a method of improved control of the extrudate temperature.

It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

### REFERENCE NUMERALS

- 100: extrusion-based AM 3D printing system
- 110: printhead assembly
- 111: feeding portion
- 112: liquefying portion
- 113: outlet portion
- 114: heating element
- 116: printhead assembly temperature sensor
- 117: extrudate
- 118: nozzle
- 119: extrudate temperature sensor
- 121: determined value of a temperature in the heater block
- 122: block representing the actual value of the temperature of the extrudate
- 130: feedstock liquefying unit
- 131: predefined area just below the nozzle
- 140: control unit
- 141: block representing the temperature offset
- 200: method
- 210: first step of exemplary embodiment of the method
- 220: second step of exemplary embodiment of the method
- 230: third step of exemplary embodiment of the method
- 240: fourth step of exemplary embodiment of the method

## Claims

1. An extrusion-based additive manufacturing, AM, three-dimensional, 3D, printing system (100), comprising:
- a printhead assembly (110) comprising a feedstock liquefying unit (130) and a heating element (114), the feedstock liquefying unit comprising:
∘ a liquefying portion (112) that is arranged in thermal contact with the heating element, the heating element being configured to generate heat for transforming solid feedstock material received in the liquefying portion into liquefied feedstock material;
∘ an outlet portion (113) that is connected to the liquefying portion for receiving liquefied feedstock material from the liquefying portion, the outlet portion being provided with a nozzle that is configured to extrude the liquefied feedstock material as an extrudate (117);
- an extrudate temperature sensor (119) that is configured and arranged with respect to the nozzle (118) for determining a temperature of the extrudate (117) freshly exiting the nozzle; and
- a control unit (140) that is operatively connected with the extrudate temperature sensor (119) and the heating element, the control unit (140) being configured to:
∘ receive input including a predefined setpoint value for the temperature of the extrudate (117);
∘ execute a heater controlling algorithm that is configured to generate control settings for the heating element on the basis of the received input;
∘ determine a temperature offset (141) between the predefined setpoint value for the temperature of the extrudate (117) and the temperature of the extrudate (117) received from the extrudate temperature sensor (119); and
∘ execute the heater controlling algorithm that is configured to generate adjusted control settings for the heating element based on said temperature offset (141) in order to at least minimize said temperature offset (141).

2. The system (100) according to claim 1, wherein the heater controlling algorithm is configured to use a relationship between the received input and the control settings for the heating element (114), and wherein the control unit (140) is configured to perform a calibration action of the heater controlling algorithm for generating the adjusted control settings for the heating element (114), the calibration action being configured to involve an adjustment of said relationship on the basis of the temperature offset (141).

3. The system (100) according to claim 2, wherein a flow rate of the liquified feedstock material is variable, and wherein the control unit (140) is configured to perform the calibration action for different values of the flow rate of the liquefied feedstock material and to determine the temperature offset (141) in respect of each of the respective values of the flow rate of the liquefied feedstock material.

4. The system (100) according to claim 3, wherein the received input further includes a value of the flow rate of the liquefied feedstock material.

5. The system (100) according to any one of the claims 1-4, wherein the heater controlling algorithm is configured to determine a setpoint value of a temperature of the heating element on the basis of a relationship between the predefined setpoint value of the temperature of the extrudate (117) and the setpoint value of a temperature of the heating element (114).

6. The system (100) according to any one of the claims 1-5, comprising a printhead assembly temperature sensor (116) that is configured and arranged to determine a temperature of at least one of the heating element (114) and the nozzle (118).

7. The system (100) according to claim 6 insofar as dependent on claim 5, wherein the printhead assembly temperature sensor (116) is configured to determine a temperature of the heating element (114), and wherein the control unit (140) is configured to receive a determined value (121) of a temperature of the heating element (114) and to generate adjusted control settings for the heating element in case the determined value (121) of a temperature of the heating element (114) differs from the setpoint value of a temperature of the heating element more than a predetermined amount.

8. The system (100) according to any one of the claims 1-7, wherein the extrudate temperature sensor (119) is removably arranged in the system (100) and is selected from a group that includes an infrared sensor and a thermal camera.

9. The system (100) according to any one of the claims 1-8, wherein the control unit (140) is configured to generate an alarm signal if said temperature offset (141) is higher than a first predefined threshold value and/or to prevent operation of the system (100) if said temperature offset (141) is higher than a second predefined threshold value, wherein said second predefined threshold value is higher than said first predefined threshold value.

10. A method (200) of improved control of a temperature of an extrudate that is extruded using an extrusion-based additive manufacturing, AM, three-dimensional, 3D, printing system (100) that comprises:
- a printhead assembly (110) comprising a feedstock liquefying unit (130) and a heating element (114), the feedstock liquefying unit comprising:
∘ a liquefying portion (112) that is arranged in thermal contact with the heating element, the heating element being configured to generate heat for transforming solid feedstock material received in the liquefying portion into liquefied feedstock material;
∘ an outlet portion (113) that is connected to the liquefying portion for receiving liquefied feedstock material from the liquefying portion, the outlet portion being provided with a nozzle that is configured to extrude the liquefied feedstock material as an extrudate (117);
- an extrudate temperature sensor (119) that is configured and arranged with respect to the nozzle (118) for determining a temperature of the extrudate (117) freshly exiting the nozzle; and
- a control unit (140) that is operatively connected with the extrudate temperature sensor (119) and the heating element (114), the control unit (140) being configured to
∘ receive input including a predefined setpoint value for the temperature of the extrudate (117);
∘ execute a heater controlling algorithm that is configured to generate control settings for the heating element on the basis of the received input;
∘ determine a temperature offset (141) between the predefined setpoint value for the temperature of the extrudate (117) and the temperature of the extrudate (117) received from the extrudate temperature sensor (119); and
∘ execute the heater controlling algorithm that is configured to generate adjusted control settings for the heating element based on said temperature offset (141) in order to at least minimize said temperature offset (141);
wherein the method (200) comprises:
- operating the control unit (140) to execute a heater controlling algorithm for generating control settings for the heating element (114) on the basis of the received input;
- operating the extrudate temperature sensor (119) to determine the temperature of the extrudate (117) freshly exiting the nozzle;
- operating the control unit (140) to determine the temperature offset (141) between the predefined setpoint value for the temperature of the extrudate (117) and the determined temperature of the extrudate (117) freshly exiting the nozzle; and
- operating the control unit (140) to execute the heater controlling algorithm for generating adjusted control settings for the heating element (114) based on said temperature offset (141) in order to at least minimize said temperature offset (141).

11. The method (200) according to claim 10, wherein the heater controlling algorithm is configured to use a relationship between the received input and the control settings for the heating element (114), the method (200) comprising:
- operating the control unit (140) to perform a calibration action of the heater controlling algorithm for generating the adjusted control settings for the heating element (114); and
wherein the calibration action involves:
- adjusting said relationship on the basis of the temperature offset (141).

12. The method (200) according to claim 11, wherein a flow rate of the liquified feedstock material is variable, the method (200) comprising:
- operating the control unit (140) to perform the calibration action for different values of the flow rate of the liquefied feedstock material and to determine said temperature offset (141) in respect of each of the respective values of the flow rate of the liquefied feedstock material.

13. The method (200) according to claim 12, further comprising:
- operating the control unit (140) to execute the heater controlling algorithm for generating control settings for the heating element (114) on the basis of received input that further includes a value of the flow rate of the liquefied feedstock material.

14. The method (200) according to any one of claims 11-13, further comprising:
- operating the control unit (140) to determine a setpoint value of a temperature of the heating element (114) on the basis of a relationship between the predefined setpoint value of the temperature of the extrudate (117) and the setpoint value of a temperature of the heating element.

15. The method (200) according to claim 14, further comprising:
- operating a printhead assembly temperature sensor (116) to determine a temperature of the heating element, and
- operating the control unit (140) to receive a determined value (121) of a temperature of the heating element (114) and to generate adjusted control settings of the heating element in case the determined value (121) of a temperature of the heating element differs from the setpoint value of a temperature of the heating element more than a predetermined amount.
